# EUROPÄISCHE PATENTANMELDUNG

(11) **EP 1 392 021 A2**
(43) Veröffentlichungstag der Anmeldung: **25.02.2004**
(21) Anmeldenummer: 03017205.0
(22) Anmeldetag: 29.07.2003
(51) Int. Cl.: H04L 12/28

(54) **Anordnung zur prozessorgestützten Datenein- und/oder Ausgabe**

(30) Priorität: 13.08.2002 DE 10237129
(71) Anmelder: Dolch Computer Systems GmbH, 85521 Ottobrunn (DE)
(72) Erfinder: Linschitz, Boris, Dr., 85521 Ottobrunn (DE); Müller, Peter, 64354 Reinheim (DE); Kellner, Dieter, 83624 Otterfing (DE); Guessregen, Jens M., 86343 Königsbrunn (DE)
(74) Vertreter: Kruspig, Volkmar, Dipl.-Ing.

(57) **Zusammenfassung**

Die Erfindung betrifft eine Anordnung zur prozessorgestützten Datenein- und/oder Ausgabe, umfassend einen Flachbildschirm (11) mit Touch-Screen-Funktion und zugehörigen Controller (14), eine Stromversorgungseinheit (2) sowie mindestens eine Schnittstelle (7) zum Datentransfer von und zu einem Computersystem. Erfindungsgemäß ist am Ein-/Ausgabeport (6) der mindestens einen Schnittstelle (7) eine Sender-/ Empfängerbaugruppe (8) zur drahtlosen Kommunikation mit dem Computersystem angeschlossen. Eine elektronische Umschalteinrichtung bewirkt nach Detektion drahtgebunden zuführbar oder zugeführter Daten ein Deaktivierung der Sender-/Empfängerbaugruppe (8) zur drahtlosen Kommunikation. Beim Fehler derartig drahtgebunden zugeführter Daten erfolgt ein automatisches, unterbrechungsfreies Aktivieren der Einheit zur drahtlosen Kommunikation (8), wobei die Stromversorgung der Anordnung netzfrei möglich ist.

## Beschreibung

Die Erfindung betrifft eine Anordnung zur prozessorgestützten Datenein- und/oder Ausgabe, umfassend einen Flachbildschirm mit Touch-Screen-Funktion und zugehörigem Controller, eine Stromversorgungseinheit sowie mindestens eine Schnittstelle zum Datentransfer von und zu einem Computersystem gemäß Oberbegriff des Anspruches 1.

Anordnungen zur prozessorgestützten Datenein- und/oder Ausgabe in Form von Terminals, welche über einen analogen und/oder digitalen Videoeingang verfügen, z. B. in Form von Flachbildschirmen als Displays, gehören zum bekannten Stand der Technik.

Derartige Anordnungen dienen in Verbindung mit Personal Computer systemen zur Ausgabe von graphischen Informationen und besitzen Bedienelemente zur Helligkeits- Kontrast- und Farbsättigungseinstellung, die teilweise auch OSD unterstützt arbeiten.
Der Videoanschluss erfolgt von einer im Personalcomputersystem vorhandenen Graphikkarte über eine Standardschnittstelle zum entsprechenden Videoeingang des Displays.

Bei Notebooks bilden Computersystem, Tastatur und Flachbildschirm eine bauliche Einheit, wobei trotz fortschreitender Technik die Geräte immer noch über eine Masse verfügen, die bei vielen Anwendungsfällen nicht optimal ist und zu Einschränkungen führt.

Bei einem sogenannten Tablet-PC wird mit einem Stift anstelle einer Computermaus als Eingabegerät gearbeitet. Hier finden TFT-Displays mit integriertem Graphiktablett Anwendung. Bekannt sind ebenfalls Notebooks mit schwenkbaren Display, wobei nach Umschwenken das Gerät dann als Tablet-PC arbeitet.

Aus dem Vorgenannten ist es daher Aufgabe der Erfindung in Weiterbildung des Standes der Technik ein intelligentes Interface anzugeben, welches eine Vielzahl von Funktionen übernimmt und das nur einen geringen Bauraum bei minimaler Masse benötigt bzw. aufweist. Die zuschaffende Anordnung soll in effektiver Weise eine Datenein- und/oder Ausgabe ermöglichen, ohne dass, wie bei klassischen Einrichtungen üblich, im Einsatzfall mehrere Komponenten durch den Benutzer zusammengefügt werden müssen.

Die Lösung der Aufgabe der Erfindung erfolgt mit einer Anordnung zur prozessorgestützten Datenein- und/oder Ausgabe auf der Basis eines Flachbildschirms mit Touch-Screen-Funktion gemäß der Lehre nach Patentanspruch 1, wobei die Unteransprüche mindestens zweckmäßige Ausgestaltungen und Weiterbildungen darstellen.

So ist erfindungsgemäß vorgesehen, dass am Ein-/Ausgabeport der vorhandenen mindestens einen Schnittstelle eine Sender-/Empfängerbaugruppe zur drahtlosen Kommunikation mit einem entfernt gehaltenen Computersystem angeschlossen ist, wobei eine elektronische Umschalteinrichtung nach der Detektion drahtgebunden zuführbarer oder zugeführter Daten die Sender-/Empfängergruppe zur drahtlosen Kommunikation bezogen auf den Datentransfer unterbrechungsfrei deaktiviert und beim Fehlen derartiger drahtgebundener zugeführter Daten automatisch sowie ebenfalls unterbrechungsfrei aktiviert wird, wobei eine Stromversorgungseinheit vorgesehen ist, die einen netzfreien, d.h. batteriegestützten Betrieb ermöglicht.

Es ist also vorgesehen, dass die Anordnung es gestattet, die graphische Ausgabe von einem beliebigen PC-basierenden System im laufenden Betrieb von direkter Verbindung, z.B. einem eingedockten Zustand, auf drahtlose Verbindung, d.h. bei ausgedocktem Betrieb umzuschalten, wobei der Vorgang jederzeit und beliebig oft wiederholbar ist.

Hierfür enthält die vorgeschlagene Anordnung den oben erwähnten elektronischen Schalter, der das Vorhandensein kabelgebundener Videosignale erkennt. In diesem Falle werden die kabelgebundenen Signale direkt über einen ansich bekannten Displaywandler zur Anzeige gebracht und die eigentliche drahtlose Verbindung ist inaktiv.

Bei der Entnahme der Anordnung aus der Direktverbindung bzw. bei einer Unterbrechung der Direktverbindung wird ein Umschalten des elektronischen Schalters vom kabelgebundenen Betrieb in den drahtlosen, kabellosen Betrieb bewirkt. Ein Prozessor übernimmt dann die Kommunikation zum Hostsystem über eine drahtlose Kommunikationsstrecke, insbesondere eine Hochfrequenz-Funkstrecke. Die Videosignale werden im Hostsystem codiert und über die Funkstrecke zurück zur Anordnung zum Zwecke der Anzeige übertragen. Die Anordnung selbst berechnet aus den empfangenen Signalen ein Bild und stellt es auf dem bevorzugten Flachbildschirm dar. Umgekehrt ist die Anordnung in der Lage, eingegebene Informationen zurück zum Hostsystem zu übertragen.

Die Sender-/Empfängerbaugruppe ist über eine Pufferschaltung mit dem Prozessor der Anordnung in Verbindung stehend, wobei mittels dieses Prozessors die übertragenen Daten wie dargelegt, codiert sowie die empfangenen Daten decodiert und zur Anzeige gebracht werden.

Das Host-Computersystem besitzt ebenfalls eine Sender-/Empfängerbaugruppe zum Aufbau der drahtlosen Kommunikationsstrecke.

Mit Hilfe des Prozessors der Anordnung sind auf dem Flachbildschirm benutzerdefinierte Schaltflächen einrichtbar.

Weiterhin besitzt die Anordnung mindestens einen externen zugänglichen Steckplatz zur Aufnahme einer Karte, enthalten die Sender-/Empfängerbaugruppe. Diese Karte ist in einer Ausführungsform der Erfindung eine Wireless-LAN-Compact Flash-Karte.

Die Stromversorgungseinheit besitzt primär- und/oder Sekundärelemente, wobei die Energieressourcen der Elemente überwacht werden und softwareseitig zur Anzeige auf dem Flachbildschirm abrufbar sind.

Zum Erhalt von funktionswesentlichen Speicherwerten ist stromversorgungsseitig ein separates Backup-Sekundärelement vorhanden.

Die Anordnung wird ergänzt durch eine externe Ladeschale mit Netzadapter, wobei die externe Ladeschale einen USB-Anschluß aufweisen kann.

Es liegt im Sinne der Erfindung, dass die Anordnung zusätzliche, frei programmierund belegbare Funktionstasten besitzt, wobei die Funktionstasten bei einer Ausführungsform in das Gehäuse der Gesamtanordnung integriert werden können.

Der anordnungsseitig vorhandene Prozessor steht mit einem zusätzlichen Applikationsspeicher in Verbindung. Dieser Applikationsspeicher ist bevorzugt ein RAM insbesondere ein SD-RAM.

Ergänzend kann die Anordnung eine weitere Schnittstelle für den Anschluß an ein drahtgebundenes Netzwerk aufweisen. Ebenso besteht die Möglichkeit zur Steuerung des Prozessors und zum ergänzenden Datenaustausch eine IrDA-Schnittstelle vorzusehen.

In Erweiterung der erfindungsgemäßen Anordnung sind zusätzliche Steckplätze, z.B. für eine MMC (Multimediacard) und/oder eine SanDisk-Card vorhanden.

Eine SanDisk-Card oder SD-Card ist eine auswechselbare, wiederbeschreibbare, nichtflüchtige Speicheranordnung, wobei das Speichern selbst in Flash-Speicherbausteinen erfolgt. Die Karte wiederum besitzt einen integrierten Controller, was die Anwendung und den Einsatz derartiger Karten vereinfacht.

Ausgestaltend besteht die Möglichkeit einen Sound-Controller vorzusehen, der mit dem Prozessor der Anordnung in Verbindung steht und der über einen Leistungsverstärker mindestens einen Lautsprecher ansteuert. Weiterhin kann am Soundcontroller ein Mikrophon zur Sprachkommunikation angeschlossen werden.

Lautsprecher und Mikrophon sind ebenso wie die erwähnten Funktionstasten in das Gehäuse der Gesamtanordnung integrierbar.

In einer Ausführungsform der Erfindung besteht die Möglichkeit, eine Einrichtung zur Überwachung des Aufbaus und Betrieb der drahtlosen Kommunikationsverbindung vorzusehen, um bei Störungen oder Reichweiteüberschreitungen mögliche Betriebsunterbrechungen anzuzeigen und/oder zu dokumentieren.

Bei dem eingesetzten Flachbildschirm handelt es sich um einen transflektiven, tageslichttauglichen Monitor, so dass die Anordnung auch bei ganz unterschiedlichen Umgebungslichtverhältnissen Anwendung finden kann.

Die als Portable Display Interface beschreibbare Anordnung zur prozessorgestützten Datenein- und/oder Ausgabe ist Bestandteil eines Aufbaukonzepts, dass als intelligentes, graphisches Interface in Verbindung mit Notebooks, Car- und Tablet PC sowie für jedes PC-basierendes System Verwendung finden kann.

Durch die Hot-Plug fähigen Schnittstellen und die batteriebetriebene Funktion der Anordnung kann ein Ortswechsel des Nutzers stattfinden, ohne dass, wie ansonsten üblich, ein Notebook mit sämtlichen Funktionalitäten transportiert werden muss oder, wie bei PC-Systemen alle Komponenten voneinander getrennt und dann an einem neuen Ort wieder aufgebaut und in Betrieb genommen werden müssen.

Mit der vorgeschlagenen Anordnung besteht insbesondere die Möglichkeit ein PC-System mit geräuschintensiven Komponenten wie Lüfter, Festplatten und dergleichen in einem entfernteren Raum vorzuhalten und allein über die Anordnung nach der Erfindung im und mit dem Computersystem zu arbeiten.
Auch ist der Einsatz bei z.B. Kraftfahrzeugen von Vorteil. So kann das eigentliche PC-System mit allen notwenigen Funktionalitäten im Kofferraum eines Fahrzeuges montiert werden und die Portable Display Interface (PDI)-Anordnung ist an beliebigen Stellen im Fahrzeug ohne Verkabelungsaufwand oder sonstige Einschränkungen nutzbar.
In dem Moment, wenn ein Flachbildschirm-Display mit integriertem Graphiktablett Anwendung findet, besteht die Möglichkeit der sehr einfachen Dateneingabe über einen Stift. Je nach Stift und Graphiktablett werden Druck und Stiftstellung ausgewertet und die Stiftspur schrifterkennend umgerechnet.

Wie oben erläutert, lässt sich die Anordnung in eine Docking-Station einschieben, wobei diese dann über eine übliche Standardvideoschnittstelle arbeitet.

Die Erfindung soll nachstehend anhand der Beschreibung von Ausführungsbeispielen sowie unter Zuhilfenahme von Figuren näher erläutert werden.

Hierbei zeigen:

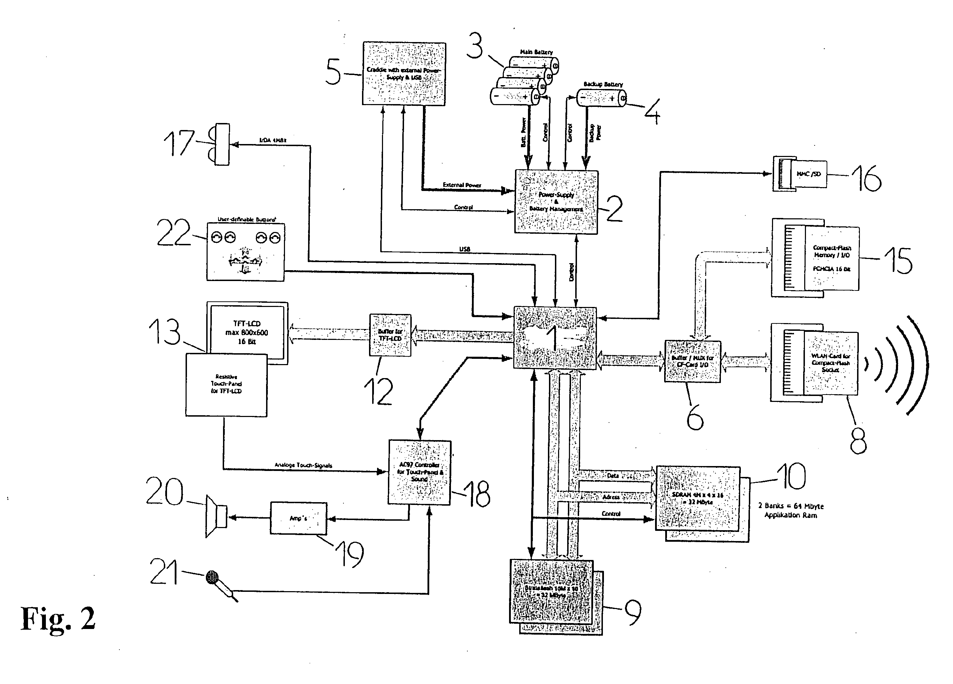

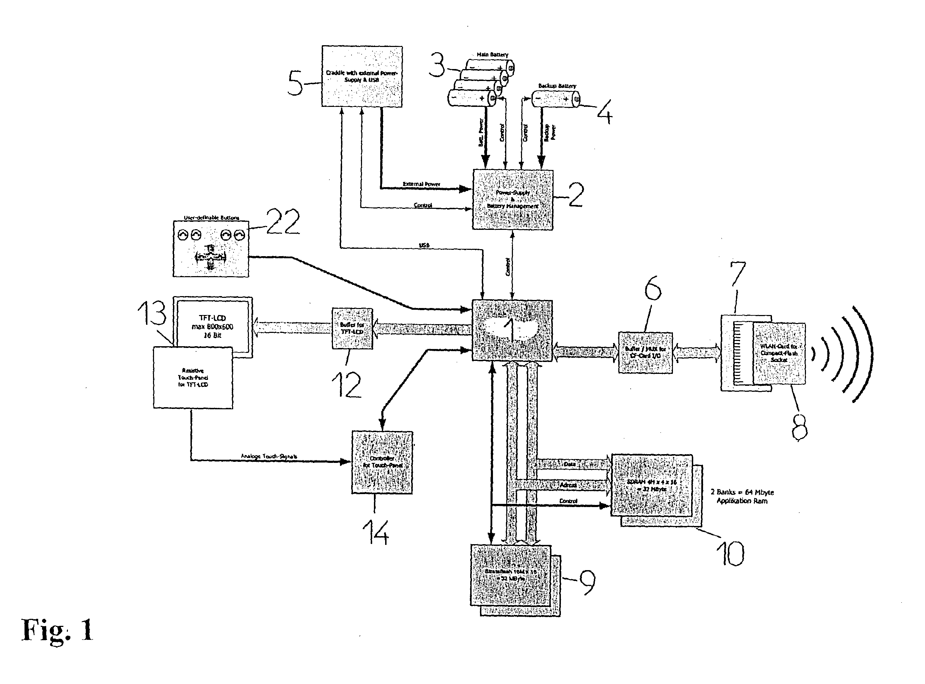

- Figur 1: ein Blockschaltbild der Portable Display Interface-Anordnung in einer ersten Ausführungsform und
- Figur 2: ein Blockschaltbild der Anordnung in einer zweiten Ausführungsform mit weiteren Funktionalitäten.

Bei der PDI-Anordnung gemäß den Ausführungsbeispielen übernimmt ein Prozessor 1 alle wesentlichen Steuerungsaufgaben einschließlich Datentransfer.

Der Prozessor 1 wird über eine Stromversorgungseinheit 2 mit Betriebsspannung versorgt, wobei diese Stromversorgungseinheit 2 mit Sekundärelementen 3 in Verbindung steht. Weiterhin ist eine Backup-Batterie 4 vorgesehen.
Ergänzend steht eine Ladeschale zur externe Stromversorgung bzw. zum Aufladen der Sekundärelemente 3 zur Verfügung. Die Ladeschale 5 kann darüber hinaus einen USB-Anschluss besitzen.
Am Ein-/Ausgabeport 6, der mit dem Prozessor 1 in Verbindung steht, ist ein Steckplatz 7 angeschlossen, welcher eine Sender-/Empfängerbaugruppe 8 aufnimmt. Diese Sender-/Empfängerbaugruppe 8 kann eine Wireless-LAN-Card einschließlich Antenne sein.

Am Prozessor 1 ist gemäß Ausführungsbeispiel z. Bsp. ein 32 MBit Flashspeicher 9 angeschlossen, wobei am selben Daten- und Adressbus ein Applikationsspeicher 10 betrieben wird.
Der Applikationsspeicher 10 ist bei der gezeigten Ausführungsform z. Bsp. ein 64 MBit SDRAM.

Der Prozessor 1 übernimmt weiterhin die Steuerung des Flachbildschirmes 11 über einen entsprechenden Puffer 12. Ein Touch-Paneel oder Touch-Screen 13 ist mit einem Controller 14 in Verbindung stehend, der wiederum Daten mit dem Prozessor 1 austauscht.

Beim Ausführungsbeispiel wird softwareseitig erkannt, ob drahtgebunden Videodaten zugeführt werden. Wenn dies der Fall ist, dann wird die Sender-/-Empfängerbaugruppe 8 zur drahtlosen Kommunikation automatisch deaktiviert und zwar in unterbrechungsfreier Weise. Wird die Anordnung z. B. aus einer Docking-Station entnommen, dann erfolgt automatisch eine Umschaltung auf drahtlosen Betrieb, d.h. es wird die Sender-/Empfängerbaugruppe 8 aktiviert.

Bei dem Ausführungsbeispiel nach Figur 2 ist der Ein-/Ausgabeport 6 mit einer Multiplexerfunktion versehen. Dementsprechend ist am Multiplexer eine weitere Schnittstelle mit Steckplatz für einen Compact-Flashspeicher 15 ausgebildet. Eine dort vorgesehene PCMCIA-Karte ermöglicht dem Aufbau einer Verbindung und den Datenaustausch über ein drahtgebundenes Netzwerk (LAN).

Ein weiterer Steckplatz dient der Aufnahme von Multimedia- oder SD-Karten 16.

Eine Infrarotschnittstelle 17 dient der Eingabe von Steuerungsbefehlen und stellt eine zusätzliche Kommunikationsmöglichkeit mit der Umgebung dar.

Gemäß zweiten Ausführungsbeispiel besitzt die Anordnung zusätzlich einen Soundcontroller 18, der über einen Leistungsverstärker 19 mit einem Lautsprecher 20 in Verbindung steht und der von einem Mikrophon 21 gelieferte Signale verarbeiten kann.

Grundsätzlich besteht die Möglichkeit zusätzliche, frei programmier- und belegbare Funktionstasten 22 vorzusehen.

Bezüglich des Flachbildschirms werden Displays mit Bildschirmdiagonalen von 8.4 Zoll und 10.4 Zoll und Sonnenlichtlesbarkeit ausgewählt. Durch den Einsatz von Low-Power-Komponenten ist eine Batteriestandzeit von 5 Stunden und mehr erreichbar.
Das interne Betriebsystem der Anordnung ermöglicht nicht nur die Koordination und Steuerung des drahtlosen Datenaustausches, sondern auch alle Notwendigkeiten für das Betreiben des Displays. Gemäß Ausführungsbeispiel nach Figur 2 sind weitere Funktionalitäten eines an sich bekannten PDA erfüllt.

### Bezugszeichenliste

- 1: Prozessor
- 2: Stromversorgungseinheit
- 3: Sekundärelement
- 4: Backup-Batterie
- 5: Ladeschale
- 6: Ein-/ Ausgabe Port
- 7: Steckplatz
- 8: Sender-/ Empfängerbaugruppe
- 9: Flash Speicher
- 10: Applikationsspeicher
- 11: Flachbildschirm
- 12: Puffer
- 13: Touchscreen
- 14: Controller für Touchscreen
- 15: Compact Flash Speicher
- 16: Steckplatz für MMC/SD-Card
- 17: Infrarotschnittstelle
- 18: Soundcontroller
- 19: Leistungsverstärker
- 20: Lautsprecher
- 21: Mikrofon
- 22: frei programmierbare Funktionstasten

## Patentansprüche

1. Anordnung zur prozessorgestützten Datenein- und/oder Ausgabe, umfassend einen Flachbildschirm mit Touch-Screen- Funktion und zugehörigem Controller, eine Stromversorgungseinheit sowie mindestens eine Schnittstelle zum Datentransfer von und zu einem Computersystem,
**dadurch gekennzeichnet, dass**
am Ein-/ Ausgabeport der mindestens einen Schnittstelle eine Sender-/ Empfängerbaugruppe zur drahtlosen Kommunikation mit dem Computersystem angeschlossen ist, wobei eine elektronische Umschalteinrichtung nach Detektion drahtgebunden zuführbarer oder zugeführter Daten die Sender-/ Empfängerbaugruppe zur drahtlosen Kommunikation bezogen auf den Datentransfer unterbrechungsfrei deaktiviert und beim Fehlen derartiger drahtgebundener zugeführter Daten automatisch sowie unterbrechungsfrei aktiviert, wobei die Stromversorgungseinheit einen netzfreien Betrieb ermöglicht.

2. Anordnung nach Anspruch 1,
**dadurch gekennzeichnet, dass**
die Sender-/Empfängerbaugruppe über eine Pufferschaltung mit dem Prozessor in Verbindung steht, mittels des Prozessors die zu übertragenen Daten codiert sowie die empfangenen Daten decodiert und zur Anzeige gebracht werden.

3. Anordnung nach Anspruch 1 oder 2,
**dadurch gekennzeichnet, dass**
das Computersystem eine kompatible Sender-/Empfängerbaugruppe zur drahtlosen Kommunikation aufweist.

4. Anordnung nach einem der vorangegangenen Ansprüche,
**dadurch gekennzeichnet, dass**
mit Hilfe des Prozessors auf dem Flachbildschirm benutzerdefinierte Schaltflächen einrichtbar sind.

5. Anordnung nach einem der vorangegangenen Ansprüche,
**dadurch gekennzeichnet, dass**
mindestens ein extern zugänglicher Steckplatz zur Aufnahme einer Karte, enthaltend die Sender-/Empfängerbaugruppe vorgesehen ist.

6. Anordnung nach Anspruch 5,
**dadurch gekennzeichnet, dass**
die Karte eine Wireless-LAN-Compact Flash Karte ist.

7. Anordnung nach einem der vorangegangenen Ansprüche,
**dadurch gekennzeichnet, dass**
die Stromversorgungseinheit Primär- und/oder Sekundärelemente aufweist, wobei die Energieressourcen der Elemente überwacht werden und softwareseitig zur Anzeige auf dem Flachbildschirm abrufbar sind.

8. Anordnung nach Anspruch 7,
**dadurch gekennzeichnet, dass**
ein separates Backup-Sekundärelement vorhanden ist.

9. Anordnung nach einem der vorangegangenen Ansprüche,
**gekennzeichnet durch**
eine externe Ladeschale mit Netzadapter.

10. Anordnung nach Anspruch 9,
**dadurch gekennzeichnet, dass**
die externe Ladeschale einen USB-Anschluss aufweist.

11. Anordnung nach einem der vorangegangenen Ansprüche,
**dadurch gekennzeichnet, dass**
zusätzliche, frei programmier- und belegbare Funktionstasten vorgesehen sind.

12. Anordnung nach Anspruch 11,
**dadurch gekennzeichnet, dass**
die Funktionstasten in das Gehäuse der Gesamtanordnung integriert sind.

13. Anordnung nach einem der vorangegangenen Ansprüche,
**dadurch gekennzeichnet, dass**
der Prozessor mit einem zusätzlichen Applikationsspeicher in Verbindung steht.

14. Anordnung nach Anspruch 13,
**dadurch gekennzeichnet, dass**
der Applikationsspeicher ein RAM, insbesondere SDRAM ist.

15. Anordnung nach einem der vorangegangenen Ansprüche,
**dadurch gekennzeichnet, dass**
eine weitere Schnittstelle für den Anschluss an ein drahtgebundenes Netzwerk vorgesehen ist.

16. Anordnung nach einem der vorangegangenen Ansprüche,
**dadurch gekennzeichnet, dass**
zur Steuerung des Prozessors und zum ergänzenden Datenaustausch eine Infrarot (IrDa)-Schnittstelle vorgesehen ist.

17. Anordnung nach einem der vorangegangenen Ansprüche,
**gekennzeichnet durch**,
einen extern zugänglichen Steckplatz für eine MMC- und/oder SD-Card.

18. Anordnung nach einem der vorangegangenen Ansprüche,
**dadurch gekennzeichnet, dass**
ein Soundcontroller mit dem Prozessor in Verbindung steht, welcher über einen Leistungsverstärker mindestens einen Lautsprecher ansteuert.

19. Anordnung nach Anspruch 18,
**dadurch gekennzeichnet, dass**
am Soundcontroller ein Mikrophon anschließbar ist.

20. Anordnung nach Anspruch 18 und 19,
**dadurch gekennzeichnet, dass**
Lautsprecher und Mikrophon im Gehäuse der Gesamtanordnung integriert sind.

21. Anordnung nach einem der vorangegangenen Ansprüche,
**dadurch gekennzeichnet, dass**
eine Einrichtung zur Überwachung vom Aufbau und Betrieb der drahtlosen Kommunikationsverbindung vorgesehen ist, um bei Störungen oder Reichweiteüberschreitungen mögliche Betriebsunterbrechungen anzuzeigen und/oder zu dokumentieren.

22. Anordnung nach einem der vorangegangenen Ansprüche,
**gekennzeichnet durch**
einen transflektiven, tageslichttauglichen Flachbildschirm.

23. Anordnung nach einem der vorangegangen Ansprüche,
**gekennzeichnet durch**
deren Verwendung als tragbares Display-Interface in Verbindung mit einem Notebook, Car- oder Tablet-PC.
